# EUROPEAN PATENT SPECIFICATION

(11) **EP 0 888 067 B1**
(45) Date of publication and mention of the grant of the patent: **03.12.2003**
(21) Application number: 96945016.2
(22) Date of filing: 19.12.1996
(51) Int. Cl.: A23G 3/30

(54) **CHEWABLE COMPOSITIONS**
ZUSAMMENSETZUNG ZUM KAUEN
COMPOSITIONS A MACHER

(30) Priority: 29.12.1995 GB 9526636
(43) Date of publication of application: 07.01.1999
(73) Proprietor: Nienaber, Paul, Dr., 55218 Ingelheim (DE); Hanke, Bernhard, 65307 Bad Schwalbach (DE)
(72) Inventor: HANKE, Benhard, D-65307 Bad Schwalbach (DE); NIENABER, Paul, D-55218 Ingelheim (DE); BEALIN-KELLY, Francis, Surrey KT12 2AG (GB)
(74) Representative: Clemo, Nicholas Graham
(86) International application number: US9620583
(87) International publication number: WO97024036

(56) References cited:
- US-A- 3 857 964
- US-A- 3 867 556
- US-A- 4 001 438
- US-A- 4 206 301
- US-A- 4 386 106
- US-A- 4 448 789
- US-A- 4 485 118
- US-A- 4 724 151
- US-A- 4 800 091
- US-A- 4 933 189
- US-A- 5 437 876

## Description

### Field of the Invention

The present invention relates to chewable compositions and more particularly to chewable confectionery compositions having extended throat soothing properties. The invention further relates to methods for making such products.

### Background of the Invention

A variety of materials, for example physiological coolants (especially menthol), anaesthetics, NSAIDS, are known for the soothing of sore throats and the relief of other symptoms of coughs and colds. A common means of delivering such a material to the affected part is from a confection, such as a throat drop or lozenge which releases the active agent upon sucking or chewing. The taste of the confection may be made more palatable by supplementing the composition with a further flavourant such as a lemon, orange or cherry essence.

EP-A-431,376, for example, discloses hard confections for sustained release treatment of sore throats comprising hydrogenated isomaltulose and an active ingredient which can be an antitussive or antihistamine but can also be menthol or eucalyptus. The confection normally contains a further flavouring agent such as lemon, honey or cherry but which can also be menthol or eucalyptus.

Menthol containing gelatine gums are also known for the same purpose and it has further been recognised in the art that chewing gums can provide useful vehicles for sore throat treatment. Thus EP-A-299,924 describes chewing gums containing an anaesthetic as a sore throat remedy.

One of the advantages of the chewing gum is that it is maintained in the mouth for an extended period (typically up to 20 minutes or so) and can, theoretically, deliver an active over a longer period of time than other product forms which dissolve or disintegrate. In practice, this objective is not always achieved, due to the well-known tendency of a chewing gum base to entrap substantial quantities of active or flavour. Loss of flavour, in particular, is a significant disincentive to prolonged chewing.

Significant effort has been expended therefore in attempting to prolong the release or sensation of flavour and other active ingredients from chewable compositions. Since increasing the level of flavour or active ingredient leads to increased cost and often presents taste problems upon initial chewing, most attempts have been directed towards attenuating release through, in particular, encapsulation techniques.

EP-A-185,442, describes a delivery system for a sweetener, flavour or drug material wherein the material is encapsulated within a hydrophobic matrix comprising lecithin, a fat or wax, and a glyceride. Chewing gums comprising the delivery system are also disclosed.

US-A-4,001,438 discloses the co-use of a non-confined flavour oil and a hydrolytically releasable flavour oil physically entrapped within, for example, a gum or a starch.

EP-A-265,386 describes a yet more complex flavouring system whereby improved breath-freshening is imparted to chewing gum or confectionery compositions, through the use of three separate flavour components; (a) 0.2 - 2% of a liquid spearmint or peppermint oil with defined menthol content, (b) 0.2 - 2% of a spray-dried spearmint or peppermint oil, and (c) 0.2 - 1% spray-dried menthol.

EP-A-314,626, discloses a particulate flavour delivery system wherein a powdered flavour (such as obtained by spray-drying with a sugar or polyol carrier) is encapsulated within a matrix including a flavour and sweetener enhancer (e.g. thaumatin) and a hydrophobic material selected from fats and waxes. The delivery system may be incorporated into a variety of products, including chewing gums, confectionery, dentifrices and denture adhesives.

Encapsulation has also been used as a means of masking otherwise unpleasant or bitter flavours.

GB-A-2,233,228, for instance, discloses taste-masked oral zinc compositions wherein a core of a zinc compound has a first hydrophilic coating, comprising a hydrocolloid, and a second hydrophobic coating selected from fats, fatty acids and waxes.

EP-A-458,751, describes a delivery system for cyclic amino acids, for use in chewing gums, confections and pharmaceuticals such as chewable tablets. The bitterness of the cyclic amino acid is reportedly suppressed by a first polymeric coating and a second hydrophobic coating selected from fats, fatty acids and waxes.

Two-stage coating is also known from GB-A-1,327,761 which describes double-encapsulated active components for use in bakery products. The particles have a first coating of a water-soluble material, such as a modified gum or starch, and a second coating of a water-insoluble material, especially a hydrogenated vegetable oil, fatty acid, glyceride or other ester. The encapsulate is rendered water-insoluble until heated (e.g. through baking) to the melting point of the outer coating.

US-A-3,867,556, on the other hand, describes double-encapsulated flavour particles, for use in shortenings, where the particles have an inner layer of heat-releasable material and an outer layer of water-soluble material. The inner layer is a fat hardstock, e.g. hydrogenated soybean, and cottonseed oils, with a melting point in the range from 120-160°F (49-71°C). The outer layer is a water-soluble material such as gum arabic, CMC, dextrins or other related water-soluble materials.

US-A-4,386,106 describes a method for preparing a double-encapsulated flavourant comprising the steps of (a) preparing an aqueous emulsion of a flavorant in an at least partially hydrophilic encapsulation material comprising gelatin, a natural gum and plasticizer; (b) drying the emulsion to produce a uniform solid matrix; (c) milling the matrix to a particle size of less than 20 mesh to produce a solid powder; and (d) coating the powder with a water insoluble material selected from polyvinyl acetate, polyvinyl alcohol, zein, high Bloom gelatin having a Bloom of over 100 to 300 and ethylcellulose.

More recently, WO 95/11665 discloses dosage forms for wild or domestic animals wherein water-soluble central core comprising a bio-active substance is coated with a palatable hydrophobic outer layer.

Despite the foregoing, there remains a need for improved means for extended delivery of flavours, sweeteners and other active materials to the oral cavity and throat.

It is accordingly an object of this invention to provide chewable compositions or other products having prolonged residence in the oral cavity or throat, that offer prolonged release of flavours or throat active agents.

It is a further object of the invention to provide chewable compositions having extended throat soothing properties.

### Summary of the Invention

According to one aspect of the present invention there is provided a chewable composition comprising:
i) a chewable base,
ii) a non-confined active agent,
iii) a water-releasable, entrapped active agent, and
iv) a hydrophobically coated active agent, the active agent being coated by a matrix comprising:
   (a) a water-soluble carrier; and
   (b) a hydrophobic material having a melting point in the range from 35°C to 70°C.

All levels and ratios are by weight, unless otherwise indicated. Percentages are by weight of the composition unless otherwise indicated. Statements of physical form, such as liquid, solid etc., refer to the form at 25°C unless otherwise indicated.

### Detailed Description of the invention

### Active agents

The composition of the present invention includes one or more active agents, present in non-confined, water-releasably entrapped and hydrophobically coated forms, as further defined hereinbelow. The active agent in each of the forms can be the same or different. Preferably it is the same or there is at least a major common component. Preferably it is the same. The active agent can be a flavour, a medicament or a mixture thereof. By using each of the three different forms the active agent is released more evenly throughout the chew or for a more prolonged period than if only one or two of the forms were used. Though Applicants do not intend to be bound by any theory or proposed mechanism of operation, it is believed that the non-confined active agent provides an initial release of the active agent; the water-releasably entrapped active agent starts to provide substantial release of the active only when the composition has been chewed sufficiently to allow water from the saliva to penetrate the entrapping carrier; and the hydrophobically coated active agent provides yet slower release since it further requires the transfer of sufficient heat to melt or soften the hydrophobic coating.

As used herein, the term 'flavour' means those flavour essences and equivalent synthetic ingredients which are added for the principal purpose of providing flavour to the end product. Flavours well known in the confectionery art can be used within the compositions of the invention. These flavouring agents can be chosen from synthetic flavouring liquid and/or oils derived from plants leaves, flowers, fruits and so forth, and combinations thereof. Representative flavouring liquids include: spearmint oil, cinnamon oil, oil of wintergreen (methylsalicylate) and peppermint oils. Also useful are artificial, natural or synthetic fruit flavours such as citrus oil including lemon, orange, banana, grape, lime, apricot and grapefruit and fruit essences including apple, strawberry, cherry, orange, pineapple and so forth; bean and nut derived flavours such as coffee, cocoa, cola, peanut, almond and so forth. The amount of flavour employed is normally a matter of preference subject to such factors as flavour type, base type and strength desired. In general, amounts up to about 5% by weight and preferably from about 0.1% to about 3% by weight of the composition are usable with amounts of from about 0.5% to about 2.5% being preferred.

In preferred embodiments, the active agent of the present invention comprises a medicament. As used herein, the term 'medicament' means those substances used to deliver some therapeutic or other functional benefit to the body, particularly those agents directed at the oral cavity and/or throat. Such substances include, but are not limited to, physiological cooling agents, physiological warming agents, throat coating agents, saliva stimulants, antimicrobials, anaesthetics, decongestants, anticaries agents and mixtures thereof. Preferably the medicament is a throat active agent selected from physiological cooling agents, physiological warming agents, throat coating agents, saliva stimulants and mixtures thereof. More preferably the medicament is a physiological cooling agent.

A test for physiological cooling agents is described in GB-A-1,452,291, published October 13, 1976, reproduced herein below for convenience.

For the purpose of the present disclosure the following test procedure can be used as a means to identify compounds having a physiological cooling activity and herein referred to as cold receptor stimulants. This test is intended purely as a means for identifying compounds having a physiological cooling agent activity and useful in the present invention and for giving an indication of the different relative activities of the compounds, as between themselves and as compared with menthol, when applied in particular manner to a particular part of the body. The results are not necessarily indicative of the activity of these compounds in other formulations and other parts of the body where other factors come into play. For example, a controlling factor in the onset of cooling effect, its intensity and longevity will be the rate of penetration of the compounds through the epidermis and this will vary in different locations on the human body. The formulation of actual products according to this invention will therefore be done largely on an empirical basis although the test results and other figures given herein will be useful as a guide, particularly in the formulation of products for oral administration, since the test procedure to be described involves oral application of the compound. A similar test may, of course, be devised for the purposes of measuring the relative activities of the compounds of another area of the body, for example, the face or forearm, and this will be a useful guide in the choice of compounds to be used in preparations for external topical usage.

It will also be noted that the described test procedure is done on a statistical basis. This is necessary since sensitivity to these compounds will vary not only from compound to compound and from one part of the body to another, but also from one individual to another. Tests of this nature are commonly used in the testing of the organoleptic properties e.g. taste and smell of organic and inorganic compounds, see Kirk-Othmer: Encyclopaedia of Chemical Technology, 2nd Ed. (1967) Vol. 14, pages 336-344.

The following test procedure is aimed at determining the minimum quantity of the test compound required to produce a noticeable cooling effect in a person of average sensitivity, this minimum quantity being termed the threshold for that particular compound. The tests are carried out on a selected panel of 6 people of median sensitivity to ℓ-menthol.

To select a test panel of average sensitivity the following procedure is used. Known quantities of 1-menthol in solution in petroleum ether (bp. 40-60) are placed on 5 mm squares of filter paper, whereafter the solvent is allowed to evaporate. A panel of observers is enrolled and asked to place one impregnated square at a time on the tongue and to report on the presence or absence of a cooling effect. The quantity of ℓ-menthol on each impregnated square is gradually reduced from a value substantially above 0.25µg. per square to substantially below 0.25µg, the precise range being immaterial. Conveniently, one starts with squares containing 2.0µg being half that of the preceding square, i.e. the second test square will contain 1.0µg, the third 0.5µg, and so on. Each quantity is tested on the tongue at least 10 times. In this way, the thresholds to cold receptor stimulus by ℓ-menthol are determined for each individual of the panel, the threshold for each individual being that amount of ℓ-menthol for which, in a series of not less than 10 test applications, a cooling effect is reported 50% of the time. Six panel members are now selected whose threshold to ℓ-menthol is in the range 0.1µg to 10µg and whose average threshold is approximately 0.25µg, this select panel being regarded as the test panel of average sensitivity.

To test the activity of cooling agents, the above procedure is repeated using only the 6 selected panel members of average sensitivity to ℓ-menthol. The individual thresholds for each test compound on each of the 6 selected panel members are determined and averaged. Those compounds whose average threshold on the select test panel is 100µg or less, preferably 50µg or less are regarded as having cooling activity in accordance with this invention.

Physiological cooling agents suitable for use herein include carboxamides, menthol, eucalyptus, menthane esters and menthane ethers, and mixtures thereof.

Suitable menthane ethers for use herein are selected from those with the formula: 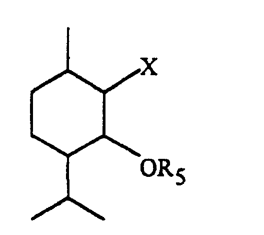 where R₅ is an optionally hydroxy substituted aliphatic radical containing up to 25 carbon atoms, preferably up to 5 carbon atoms, and where X is hydrogen or hydroxy, such as those commercially available under the trade name Takasago, from Takasago International Corporation. A particularly preferred cooling agent for use in the compositions of the present invention is Takasago 10 [3-1-menthoxy propan-1,2-diol (MPD)]. MPD is a monoglycerin derivative of 1-menthol and has excellent cooling activity.

The carboxamides found most useful are those described in US-A-4,136,163, January 23, 1979 to Watson et al., and US-A-4,230, 688, October 28, 1980 to Rowsell et al.

The carboxamides in US-A-4,136,163 are N-substituted-p-menthane-3-carboxamides. These compounds are 3-substituted-p-menthanes of the formula: 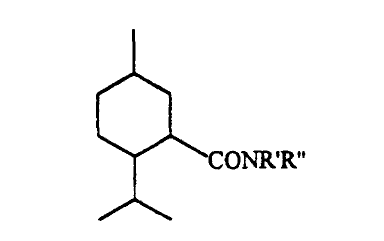 where R', when taken separately, is hydrogen or an aliphatio radical containing up to 25 carbon atoms; R" when taken separately is hydroxy, or an aliphatic radical containing up to 25 carbon atoms, with the proviso that when R' is hydrogen R" may also be an aryl radical of up to 10 carbon atoms and selected from the group consisting of substituted phenyl, phenalkyl or substituted phenalkyl, naphthyl and substituted naphthyl, pyridyl; and R' and R", when taken together with the nitrogen atom to which they are attached, represent a cyclic or heterocyclic group of up to 25 carbon atoms, e.g. piperidino, morpholino etc.

In the above definitions "aliphatic" is intended to include any straight-chained, branched-chained or cyclic radical free or aromatic unsaturation, and thus embraces alkyl, cycloalkyl, alkenyl, cyclo-alkenyl, alkynyl, hydroxyalkyl, acyloxyalkyl, alkoxy, alkoxyalkyl, aminoalkyl, acylaminoalkyl, carboxyalkyl and similar combinations.

Typical values for R' and R" when aliphatic are methyl, ethyl, propyl, butyl, isobutyl, n-decyl, cyclopropyl, cyclohexyl, cyclopentyl, cycloheptylmethyl, 2-hydroxyethyl, 3-hydroxy-n-propyl, 6-hydroxy-n-hexyl, 2-aminoethyl, 2-acetoxy-ethyl, 2-ethylcarboxyethyl, 4-hydroxybut-2-ynyl, carboxymethyl etc.

When R" is aryl typical values are benzyl, naphthyl, 4-methoxyphenyl, 4-hydroxyphenyl, 4-methylphenyl, 3-hydroxy-4-methylphenyl, 4-fluorophenyl, 4-nitrophenyl, 2-hydroxynaphthyl, pyridyl, etc.

The carboxamides of US-A-4,230,688 are certain acyclic tertiary and secondary carboxamides. These have the structure 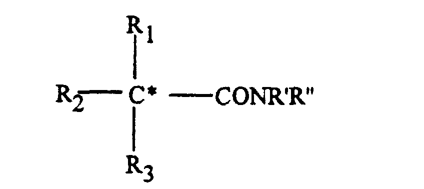 where R' and R", when taken separately, are each hydrogen, C₁-C₅ alkyl or C₁-C₈ hydroxyalkyl and provide a total of no more than 8 carbon atoms, with the proviso that when R' is hydrogen R" may also be alkylcarboxyalkyl of up to 6 carbon atoms; R' and R", when taken together, represent an alkylene group of up to 6 carbon atoms, the opposite ends of which group are attached to the amide nitrogen atom thereby to form a nitrogen heterocycle, the carbon chain of which may optionally be interrupted by oxygen; R₁ is hydrogen or C₁-C₅ alkyl; and R₂ and R₃ are each C₁-C₅ alkyl; with the provisos that (i) R₁, R₂ and R₃ together provide a total of at least 5 carbon atoms, preferably from 5-10 carbon atoms; and (ii) when R₁ is hydrogen, R₂ is C₂-C₅ alkyl and R₃ is C₃-C₅ alkyl and at least one of R₂ and R₃ is branched, preferably in an alpha or beta position relative to the carbon atom marked (*) in the formula.

Suitable menthane esters for use herein are selected from those with the formula: 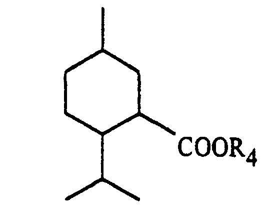 where R₄ is hydrogen, hydroxy or an aliphatic radical containing up to 25 carbon atoms.

Preferred physiological cooling agents for use herein are selected from menthol, N-substituted-p-menthane-3-carboxamides, N-substituted-2,3-dimethyl-2-isopropyl butanamides, and mixtures thereof. Most preferred is menthol.

The physiological cooling agent is preferably present in an amount of from about 0.01% to about 5%, more preferably from about 0.1% to about 3%, most preferably from about 0.2% to about 2 % by weight of the composition.

The active agent can have a sweetener mixed with it to modify the taste or otherwise lessen the impact of bitter flavours. Sweeteners may be bulk or high intensity sweeteners. Suitable bulk sweeteners are monosaccharides, disaccharides, and polysaccharides such as xylose, ribose, glucose, mannose, galactose, fructose, dextrose, sucrose, sugar maltose, fructo oligo saccharide syrups, partially hydrolysed starch, or corn syrup solids and sugar alcohols such as sorbitol, xylitol, mannitol, maltitol and mixtures thereof. Preferably the sugar alcohols are used since they are non-cariogenic. Suitable high intensity sweeteners include: dipeptide based sweeteners such as L-aspartyl-L-phenylatanine methyl ester (Aspartame) and equivalents described in U.S. Pat. No. 3,492,131, L-α-aspartyl-N-(2,2,4,4-tetramethyl-3-thietanyl)-D-alaninamide hydrate (Alitame) and the like; the soluble saccharin salts, i.e., sodium or calcium saccharin salts; cyclamate salts, acesulfame-K and the like; the free acid form of saccharin; chlorinated derivatives of sucrose such as chlorodeoxysucrose and the like; and protein based sweeteners, such as Thaumatin (talin). The high intensity sweeteners described can be added in amounts of from about 0.001% to about 2% and most preferably from about 0.01% to about 1% by weight of the composition.

The compositions of the present invention include an active agent or agents, present in non-confined, water-releasably entrapped, and hydrophobically coated forms. Each of these forms will now be described in turn.

### Non-confined active agents

A first essential feature of the present invention is a substantially non-confined active agent. As used herein, the term 'substantially non-confined' means that the agent is added to the composition in an immediately releasable form, unencumbered by the existence of any coating, entrapping agent or the like. In general, the non-confined active agent will be added as a liquid or a finely divided powder. Where the non-confined active agent comprises two or more components these may be added independently or as an intimate premix. The purpose of the non-confined active agent is to give immediate release from the chewable composition, upon initial chewing. In general, the level of the non-confined agent will be chosen to suit the desired initial effect. In certain cases, the level may be limited by considerations of compatibility with the confectionery base. Suitable levels of the non-confined agent are from about 0.01% to about 5%, preferably from about 0.1% to about 3%, more preferably from about 0.3% to about 2.5% by weight of the composition.

### Water-releasable, entrapped active agent

The compositions of the present invention further comprise a water-releasable, entrapped active agent. As used herein, the term 'water-releasable, entrapped active agent' refers to any particle comprising an active agent and a water-soluble carrier wherein the active agent and the carrier are combined to form a particle whereby the release of active in the presence of water is slowed versus release of the same amount of active in the absence of the carrier. For example, the active can be coated with the water-soluble carrier or can be dispersed within the interstices of a particulate water-soluble carrier produced by spray-drying or other suitable means. A preferred method of entrapment of the active is by spray-drying an aqueous emulsion comprising the active agent and the carrier. The purpose of the water-releasable, entrapped active agent is to provide for some delayed release of the active agent, upon initial chewing. More and more active agent can be released as more and more of the entrapping carrier contacts with water and as the length of time the material is in contact with water increases. The particles of the water-releasable, entrapped active agent, preferably have a volume average particle size in the range from about 20 µm to about 500 µm, more preferably from about 50 µm to about 300 µm. The average particle size can be measured using standard sieve techniques well known in the art.

By "water-soluble carrier" herein is meant any edible solid suitable for use in the oral cavity which forms a clear or stable aqueous solution at 25°C, at a level of 1% by weight of the solution, and which is suitable as a carrier for the active agent. The carrier is capable of being processed into granular form, yet can dissolve or disintegrate in the presence of moisture within the mouth, so as to release the entrapped active agent. In preferred embodiments the carrier is a food-grade material selected from starches, such as the modified starch available under the tradename Capsul E from National Starch & Chemical; starch hydrolysates such as maltodextrin; gums such as gum acacia and gum tragacanth; and mixtures thereof. Many flavours are commercially available in spray-dried forms which meet the above criteria. Suitable levels of the water-releasable, entrapped active agent are from about 0.1% to about 7%, preferably from about 0.3% to about 5%, more preferably from about 0.5% to about 4% by weight of the composition.

Within the water-releasable, entrapped active agent, the ratio of the carrier to the active agent is suitably in the range from about 95:5 to about 60:40, preferably from about 90:10 to about 75:25. Higher levels of the carrier generally give better entrapment of the active agent and hence slower or more prolonged release. Higher levels of the carrier are also suitable where the active agent is a liquid and it is desired to use the water-releasable, entrapped active agent in a free-flowing particulate form.

### Hydrophobically coated active agents

A third form of the active agents in the chewable composition of the present invention is as a hydrophobically coated active agent, wherein the active agent is entrapped by a matrix comprising:
(a) a water-soluble carrier; and
(b) a hydrophobic material having a melting point in the range from 35°C to 70°C.

As used herein, the term 'hydrophobically coated active agent' refers to a particle comprising an active agent and a matrix, as above, which coats the active agent. Of course, it is to be recognised by those skilled in the art that limited surface area portions of the active agent may not be fully coated by the coating matrix, for example due to irregularities in the shape of the particles. Preferably, an average of at least 90% of the surface area of the particle is coated. Such particles are intended to be included within the present invention as long as the level of the coating matrix remains sufficient to delay or slow the release of the active agent.

Preferably, the particles of the hydrophobically coated active agent have a volume average particle size in the range from about 20 µm to about 500 µm, more preferably from about 50 µm to about 300 µm.

Though Applicants do not intend to be bound by any theory or proposed mechanism of operation, it is believed that the release of the active from the matrix is facilitated by the action of both moisture and the heat of the oral cavity or throat. As a result, the hydrophobically coated active agent requires a substantial residence time in the oral cavity or throat before sufficient heat or moisture is transferred to release the active agent. The amount of heat or moisture required will depend upon such factors as the thickness and composition of the matrix and can be tailored to provide faster or slower release as required. It will further be understood that several, differently constituted matrices may be used within a single product to effect sequential release of different flavours or medicaments.

Preferred water-soluble carriers are those described above. Preferred water-soluble carrier mixtures include a mixture of starch and sorbitol, in a ratio from about 2.5:1 to about 4:1, more especially about 3:1. A mixture of gum acacia and maltodextrin in a ratio from about 1:2 to about 2:1 can also suitably be used.

The water-soluble carrier is generally present in a level of from about 20% to about 75%, preferably from about 30% to about 70%, more preferably from about 40% to about 60% by weight of the hydrophobically coated active agent.

By "hydrophobic material" herein is meant an edible, preferably food-grade, solid suitable for use in the oral cavity which remains insoluble in water at a level of 0.1% of the material in a material/water mixture at 25°C. The material has a melting point in the range from about 30°C to about 70°C. Suitable hydrophobic materials are selected from C₁₂ - C₃₀ fatty alcohols and their esters; C₁₂ - C₃₀ fatty alcohol ethoxylates; mono-, di- and tri- C₁₂ - C₃₀ fatty acid esters of glycerin; polyethylene waxes and mixtures thereof. Preferably, the material has a melting point in the range from about 35°C to about 60°C, more preferably from about 40°C to about 60°C. The hydrophobic material is generally present in a level of from about 30% to about 75%, preferably from about 35% to about 65%, more preferably from about 40% to about 55% by weight of the hydrophobically coated active agent.

Within the hydrophobically coated active agent, the active agent is suitably present at a level of from about 5% to about 40%, preferably from about 10% to about 25% by weight of the hydrophobically coated active agent.

Suitable levels of the hydrophobically coated active agent include from about 0.1% to about 10%, preferably from about 0.3% to about 7%, more preferably from about 0.5% to about 5% by weight of the composition.

### Chewable bases

The compositions of the present invention can take various forms including chewing gums, chewable tablets and chewing tobaccos. The composition comprises a chewable base appropriate to the desired product form. The chewable base acts to encourage retention of the composition in the oral cavity for a period of five minutes or more, for example by providing an insoluble mass which does not completely dissolve or disintegrate upon chewing.

Preferably, the compositions of the present invention are in the form of a chewing gum, in which case the chewable base is a chewing gum base as commonly known in the art. Chewing gums are conveniently portable and are often used several times a day. They are typically chewed for several minutes allowing time for active agents to take effect, particularly when, as in the present invention, the active agent can be released over the entire length of the chew. The chewing action itself releases saliva which can activate moisture-sensitive encapsulated materials.

Chewing gums generally comprise an essentially tasteless, predominantly water-insoluble masticatory portion (the gum base) and one or more additives, which may be water-soluble or water-extractable whose purpose is usually to improve the organoleptic properties of the gum. The chewing gum compositions of the present invention generally comprise from about 15% to about 80%, preferably from about 20% to about 65%, and more preferably from about 25% to about 50% of a chewing gum base by weight of the total composition.

An essential ingredient of the chewing gum base is an elastomer or elastomer mixture. Illustrative elastomers include styrene-butadiene rubber, synthetic gums or elastomers such as polyisobutylene and isobutylene-isoprene copolymers; natural gums or elastomers such as chicle, natural rubber, jelutong, balata, guttapercha, lechi caspi, sorva and mixtures thereof. The elastomer or elastomer mixture is generally present in an amount of from 5% to about 30% and preferably from about 7.5% to about 25% by weight of the gum base.

An optional but desirable ingredient of the chewing gum base is a resin. The resin serves to plasticise the gum base. Suitable resins for use herein include polyvinyl acetate (PVA) and terpene resins, including polyterpene and polymers of alpha-pinene or beta-pinene, and mixtures thereof. The resin can conveniently be used at a level of from about 5% to about 25%, preferably from about 8% to about 20% by weight of the gum base.

In addition to the resin component, the gum bases useful in the present invention preferably comprise a plasticiser in an amount up to about 10%, preferably from about 0.1% to about 3% by weight of the gum base. Suitable plasticisers include glyceryl triacetate, acetylated monoglyceride, glyceryl tributyrate, ethyl laurate, ethyl acetoacetate, diethyl tartrate, ethyl or butyl lactates, diethyl malate, ethyl oleate, castor oil, succinylated monoglycerides or mixtures thereof Glyceryl triacetate and acetylated monoglyceride are preferred.

Various fats can also be included in the gum base. Preferred fats include the hydrogenated vegetable oils such as hydrogenated palm oil, hydrogenated soybean oil, hydrogenated cotton seed oil and various other hydrogenated vegetable oils and mixtures thereof. The fats can suitably be used at a level up to about 20%, preferably from about 1% to about 10% by weight of the gum base.

A further desirable ingredient of the chewing gum base is an elastomer solvent. The elastomer solvent aids in softening the elastomer component. Such elastomer solvents include methyl, glycerol or pentaerythritol esters of rosins or modified rosins, such as hydrogenated, dimerized or polymerised rosins or mixtures thereof. Examples of elastomer solvents suitable for use herein include the pentaerythritol ester of partially hydrogenated wood rosin, pentaerythritol ester of wood rosin, glycerol ester of partially dimerized rosin, glycerol ester of polymerised rosin, glycerol ester of tall oil, wood or gum rosin, glycerol ester of partially hydrogenated rosin, methyl ester of partially hydrogenated rosin, and mixtures thereof. The elastomer solvent can be employed in an amount ranging from about 2% to about 50%, preferably from about 10% to about 35% by weight of the gum base.

The gum bases can also include one or more waxes. Suitable waxes include paraffin wax; microcrystalline wax; Fischer-Tropsch paraffin; natural waxes such as candellilla, camauba and beeswax; polyolefin waxes such as polyethylene wax; and mixtures thereof. The waxes can be present in levels up to about 25%, preferably from about 5% to about 20% by weight of the gum base.

The gum base also preferably includes an emulsifier. Suitable emulsifiers include glycerol monostearate, lecithin, fatty acid monoglycerides, diglycerides, propylene glycol monostearate and mixtures thereof. The emulsifier is employed in amounts up to about 10% and preferably from about 2% to about 6% by weight of the gum base.

A variety of softeners can also be employed in the gum bases useful in the present invention. Suitable softeners include fatty materials such as lanolin, stearic acid, sodium stearate and potassium stearate; polyhydric alcohols such as glycerine, sorbitol and the like; and mixtures thereof. The softeners can suitably be used at a total level of up to about 30%, preferably from about 0.1% to about 10% by weight of the gum base. Preferably, the fatty softener is stearic acid. Such materials, when incorporated into the gum base, assist in modifying the texture and consistency properties. In particular, they help to soften the chew and to maintain chew softness over an extended period of time.

Bulking agents, such as fillers, can also be employed in the gum base. Suitable fillers and bulking agents are generally non-abrasive, preferably with an average particle size less than 5 µm, more preferably less than 3 µm and especially less than 1 µm. Illustrative bulking agents include calcium carbonate or ground limestone, talc, aluminium hydroxide, alumina, aluminium silicates, dicalcium phosphate and mixtures thereof. Where present, the filler can be used in levels up to about 50%, preferably up to about 30%, most preferably from up to about 10% by weight of the gum base.

In preferred embodiments, the gum base further comprises a high intensity sweetener. Suitable high intensity sweeteners include: dipeptide based sweeteners such as L-aspartyl-L-phenylalanine methyl ester (Aspartame) and equivalents described in U.S. Pat. No. 3,492,131, L-α-aspartyl-N-(2,2,4,4-tetramethyl-3-thietanyl)-D-alaninamide hydrate (Alitame) and the like; the soluble saccharin salts, i.e., sodium or calcium saccharin salts; cyclamate salts, acesulfame-K and the like; the free acid form of saccharin; chlorinated derivatives of sucrose such as chlorodeoxysucrose and the like; and protein based sweeteners, such as Thaumatin (talin). The high intensity sweeteners described can be added in amounts of from about 0.01% to about 2.0% and most preferably from about 0.05% to about 0.5% by weight of the gum base. Using a high intensity sweetener within the gum base prolongs the flavour of the finished gum composition during chewing.

In addition, the gum base can also include colorants and pigments, such as titanium dioxide. In general, the gum base can contain up to about 2% of pigment and / or colorant. Anti-oxidants can also be included in the gum base, at a level of up to about 0.5%. Suitable anti-oxidants are butylated hydroxyanisole, butylated hydroxytoluene, propyl gallate, ascorbic acid and tocopherols.

Finished gum bases are commercially available.

The chewing gum compositions of the present invention generally further comprise various organoleptic compounds, at levels of from about 15% to about 80%, preferably from about 20% to about 65%, and more preferably from about 25% to about 50% by weight of the total composition. As used herein, the term 'organoleptic compounds' means those ingredients which are added to the pre-prepared gum base to modify the aesthetic appreciation of the final chewing gum composition by the consumer, but does not include the various forms of active agent described above. Such ingredients have the principal purpose of providing flavour and sweetness to the gum, and of modifying and enhancing the gum's chewing characteristics or other use properties, such as tackiness or initial hardness. A variety of organoleptic additives can be used, including bulk and high intensity sweeteners, flavourants, softeners, and fillers.

Suitable bulk sweeteners are monosaccharides, disaccharides, and polysaccharides such as xylose, ribose, glucose, mannose, galactose, fructose, dextrose, sucrose, sugar maltose, fructo oligo saccharide syrups, partially hydrolysed starch, or corn syrup solids and sugar alcohols such as sorbitol, xylitol, mannitol, maltitol and mixtures thereof. Preferably the sugar alcohols are used since they are non-cariogenic.

Suitable high intensity sweeteners are those described above as optional gum base ingredients.

In general, the amount of sweetener will vary with the sweetener used and desired amount of sweetener selected for a particular chewing gum. This amount will normally vary from about 0.01% when using a high intensity sweetener to about 80% by weight of the chewing gum composition when using an easily extractable bulk sweetener. The bulk sweeteners described above, are preferably used in amounts of about 30% to about 70% by weight and most preferably about 35% to about 60% by weight. By contrast, the high intensity sweeteners described are used in amounts of about 0.01% to about 2.0% and most preferably about 0.05% to about 0.5% by weight of the final gum composition. These amounts are ordinarily necessary to achieve a desired level of sweetness independent from the flavour level achieved from the flavouring agents.

Flavouring agents well known in the chewing gum art can optionally be added to the chewing gum compositions of the invention in addition to any flavours used in the active agents as defined above. These flavouring agents can be chosen from synthetic flavouring liquid and/or oils derived from plants leaves, flowers, fruits and so forth, and combinations thereof. Representative flavouring liquids include: spearmint oil, cinnamon oil, oil of wintergreen (methylsalicylate) and peppermint oils. Also useful are artificial, natural or synthetic fruit flavours such as citrus oil including lemon, orange, banana, grape, lime, apricot and grapefruit and fruit essences including apple, strawberry, cherry, orange, pineapple and so forth; bean and nut derived flavours such as coffee, cocoa, cola, peanut, almond and so forth.

The amount of flavourant employed is normally a matter of preference subject to such factors as flavour type, base type and strength desired. In general, amounts up to about 4% by weight and preferably about 0.05% to about 3.0% by weight of the final chewing gum composition are usable with amounts of about 0.8% to about 2.5% being preferred.

Softeners can optionally be included in the chewing gum composition to improve the chew characteristics and mouth feel of the gum. The softeners will generally constitute from about 0.5% to about 15% by weight of the chewing gum composition and can include glycerine, lecithin, and mixtures thereof.

The chewing gum composition of this invention can additionally comprise other conventional additives inclusive of colouring agents such as titanium dioxide; emulsifiers such as lecithin and glyceryl monostearate; and fillers as described above, for example, dicalcium phosphate, aluminium hydroxide, and combinations thereof. The total amount of fillers present is generally up to about 10% by weight of the final composition.

### Manufacturing methods

The water-releasable, entrapped active agents of the present invention are commercially available as spray-dried materials or they can be prepared using methods well known in the art.

The hydrophobically coated active agents of the present invention can be prepared using the methods described in GB-A-1,327,761 and US-A-3,867,556.

All forms of the active agents of the present invention can be incorporated into the compositions of the invention using methods well-known in the art. It is preferred to add the agents at a late stage in the process, at a temperature of less than about 70°C, preferably less than about 60°C, more preferably less than about 55°C to avoid loss of volatile components and/or causing disruption to the encapsulated active agent.

The general techniques for manufacturing confectionery products of the type described herein can be found in "Skuse's Complete Confectioner", 13th Edition, 1957, published by W.J. Bush & Company Ltd, referred to above. A more up to date source giving fuller detail of suitable equipment is the "Silesia Confiserie Manual No. 3", published by Silesia-Essenzenfabrik Gerhard Hanke K.G., Abt. Fachbücherei.

The following examples are given to illustrate the compositions according to the invention. However, the invention is not limited thereto.

### Examples

Table I describes some chewing gum compositions according to the invention. The chewing gum compositions are prepared by:
◇ Softening the gum base by gentle warming
◇ Transferring the gum base into a kettle containing the mannitol powder and mixing for approximately 5 minutes until an homogeneous mixture is obtained.
◇ To this mixture, 2/3 of the sorbitol is slowly added during the mixing process, which lasts for about 10 minutes.
◇ To this mixture maltitol syrup is added and mixing is continued for about 3 minutes.
◇ The remaining third of the sorbitol is added, and mixing continued for about 5 minutes.
◇ Then the glycerine, spray-dried menthol, hydrophobically coated menthol, aspartame and peppermint oil, are added by turn, mixing after each additional ingredient for about 2 minutes.

The gum is discharged from the kettle, formed into chunks and conditioned to room temperature (24°C).

**TABLE I**

| | I | II | III |
|---|---|---|---|
| | % | % | % |
| Gum base¹ | 33 | 33.0 | 33.0 |
| Peppermint oil | 2.2 | 1.7 | 1.7 |
| Spray-dried menthol² | 3.0 | 5.0 | 3.0 |
| Hydrophobically coated menthol³ | 5.0 | 6.0 | 9.0 |
| Sorbitol | 37.55 | 35.05 | 38.05 |
| Fat⁴ | - | 4.0 | - |
| Mannitol | 7.0 | 7.0 | 7.0 |
| Maltitol syrup⁵ | 7.0 | 5.0 | 5.0 |
| Glycerine | 5.0 | 3.0 | 3.0 |
| Aspartame | 0.25 | 0.25 | 0.25 |
| Total | 100 | 100 | 100 |

| | | | |
|---|---|---|---|
| ¹ 'Luxor' from Cafosa Gum SA, Barcelona | | | |
| ² A water-releasable, entrapped menthol consisting essentially of 15:85 menthol:gum acacia | | | |
| ³ A hydrophobically coated menthol consisting essentially of 8:48:44 menthol:gum acacia:hardened palm oil, prepared according to GB-A-1,327,761. The hardened palm oil has a melting point of 55-57°C. | | | |
| ⁴ Hardened palm oil having a melting point of 55-57°C | | | |
| ⁵ Lycasin, 85% solids, a product commercially available from Roquette | | | |

In order to evaluate the chewing gum formulations, the gum formulations are subjected to chew out test panel studies using multiple panellists, who score the product for flavour impact or perceived throat soothing at intervals through-out the chew. The chewing gum compositions of the Examples exhibit extended throat soothing.

The chewable compositions of the invention have good throat soothing properties and/or extended flavour perception.

## Claims

1. A chewable composition comprising:
i) a chewable base,
ii) a non-confined active agent,
iii) a water-releasable, entrapped active agent, and
iv) a hydrophobically coated active agent, the active agent being coated by a matrix comprising:
(a) a water-soluble carrier, and
(b) a hydrophobic material having a melting point in the range from 35°C to 70°C.

2. A chewable composition according to Claim 1 wherein the active agent is a throat active agent selected from physiological cooling agents, physiological warming agents, throat coating agents, saliva stimulants and mixtures thereof.

3. A chewable composition according to Claim 2 wherein the throat active agent is a physiological cooling agent selected from carboxamides, menthol, eucalyptus, menthane esters and menthane ethers, and mixtures thereof.

4. A chewable composition according to Claim 3 wherein the physiological cooling agent is menthol.

5. A chewable composition according to Claim 1 wherein the water-soluble carrier of the hydrophobically coated active agent is selected from starches, hydrolysed starches and gums.

6. A chewable composition according to Claim 5 wherein the water-soluble carrier is gum acacia or maltodextrin.

7. A chewable composition according to Claim 1 wherein the hydrophobic material is selected from C₁₂ - C₃₀ fatty alcohols and their esters; C₁₂ - C₃₀ fatty alcohol ethoxylates; mono-, di- and tri- C₁₂ - C₃₀ fatty acid esters of glycerin; polyethylene waxes and mixtures thereof.

8. A chewable composition according to Claim 7 wherein the hydrophobic material is selected from hydrogenated or partially hydrogenated fats and oils.

9. A chewable composition according to Claim 1 which is a chewing gum comprising from 15% to 80% of a chewing gum base.

## Patentansprüche

1. Kaubare Zusammensetzung, umfassend:
i) eine kaubare Basis,
ii) einen nicht eingeschlossenen Wirkstoff,
iii) einen wasserfreisetzbaren, eingeschlossenen Wirkstoff, und
iv) einen hydrophob beschichteten Wirkstoff, wobei der Wirkstoff beschichtet ist durch eine Matrix, umfassend:
a) einen wasserlöslichen Träger; und
b) ein hydrophobes Material mit einem Schmelzpunkt im Bereich von 35°C bis 70°C.

2. Kaubare Zusammensetzung nach Anspruch 1, wobei der Wirkstoff ein Hals-Wirkstoff ist, gewählt aus physiologischen Kühlmitteln, physiologischen Wärmemitteln, Hals-Beschichtungsmitteln, Speichelstimulanzien und Mischungen hiervon.

3. Kaubare Zusammensetzung nach Anspruch 2, wobei der Hals-Wirkstoff ein physiologisches Kühlmittel ist, gewählt aus Carboxamiden, Menthol, Eukalyptus, Menthanestern und Menthanether und Mischungen hiervon.

4. Kaubare Zusammensetzung nach Anspruch 3, wobei das physiologische Kühlmittel Menthol ist.

5. Kaubare Zusammensetzung nach Anspruch 1, wobei der wasserlösliche Träger des hydrophob beschichteten Wirkstoffs aus Stärken, hydrolysierten Stärken und Gummen gewählt ist.

6. Kaubare Zusammensetzung nach Anspruch 5, wobei der wasserlösliche Träger Akaziengummi oder Maltodextrin ist.

7. Kaubare Zusammensetzung nach Anspruch 1, wobei das hydrophobe Material gewählt ist aus C₁₂-C₃₀-Fettalkoholen und deren Estern; C₁₂-C₃₀-Fettalkoholethoxylaten; Mono-, Di- und Tri-C₁₂-C₃₀-fettsäureestern von Glyzerin; Polyethylenwachsen und Mischungen hiervon.

8. Kaubare Zusammensetzung nach Anspruch 7, wobei das hydrophobe Material aus hydrierten oder teilweise hydrierten Fetten und Ölen gewählt ist.

9. Kaubare Zusammensetzung nach Anspruch 1, welche ein Kaugummi ist, umfassend 15% bis 80% einer Kaugummibasis.

## Revendications

1. Composition à mastiquer comprenant :
i) une base à mastiquer,
ii) un agent actif non confiné,
iii) un agent actif occlus, libérable à l'eau, et
iv) un agent actif à revêtement hydrophobe, cet agent actif étant revêtu par une matrice comprenant :
(a) un support hydrosoluble ; et
(b) une matière hydrophobe possédant un point de fusion dans la gamme de 35 °C à 70 °C .

2. Composition à mastiquer selon la revendication 1, dans laquelle l'agent actif est un agent actif au niveau de la gorge, choisi parmi des agents rafraîchissants physiologiques, des agents réchauffants physiologiques, des agents de revêtement de la gorge, des stimulants de la salive et leurs mélanges.

3. Composition à mastiquer selon la revendication 2, dans laquelle l'agent actif au niveau de la gorge est un agent rafraîchissant physiologique choisi parmi des carboxamides, le menthol, l'eucalyptus, des esters de menthane et des éthers de menthane et leurs mélanges.

4. Composition à mastiquer selon la revendication 3, dans laquelle l'agent rafraîchissant physiologique est le menthol.

5. Composition à mastiquer selon la revendication 1, dans laquelle le support hydrosoluble de l'agent actif à revêtement hydrophobe est choisi parmi les amidons, les amidons hydrolysés et les gommes.

6. Composition à mastiquer selon la revendication 5, dans laquelle le support hydrosoluble est la gomme acacia ou la maltodextrine.

7. Composition à mastiquer selon la revendication 1, dans laquelle la matière hydrophobe est choisie parmi des alcools gras en C₁₂-C₃₀ et leurs esters ; des éthoxylates d'alcools gras en C₁₂-C_{30;} des mono-, di- et tri-esters d'acides gras en C₁₂-C₃₀ de la glycérine ; des cires de polyéthylène, et leurs mélanges.

8. Composition à mastiquer selon la revendication 7, dans laquelle la matière hydrophobe est choisie parmi les graisses et huiles hydrogénées ou partiellement hydrogénées.

9. Composition à mastiquer selon la revendication 1, qui est un chewing-gum comprenant 15 à 80 % d'une base de chewing-gum.
